# EUROPEAN PATENT SPECIFICATION

(11) **EP 4 381 794 B1**
(45) Date of publication and mention of the grant of the patent: **14.01.2026**
(21) Application number: 22757263.3
(22) Date of filing: 25.07.2022
(51) Int. Cl.: H04W 36/00

(54) **MEASUREMENT CONFIGURATION UPDATE DURING CONDITIONAL RECONFIGURATION FOR PSCELL FOR WIRELESS NETWORKS**
MESSKONFIGURATIONSAKTUALISIERUNG WÄHREND EINER BEDINGTEN NEUKONFIGURATION FÜR PSCELL FÜR DRAHTLOSE NETZWERKE
MISE À JOUR DE CONFIGURATION DE MESURE PENDANT UNE RECONFIGURATION CONDITIONNELLE DESTINÉE À UNE PSCELL POUR RÉSEAUX SANS FIL

(30) Priority: 06.08.2021 IN 202141035564
(43) Date of publication of application: 12.06.2024
(73) Proprietor: Nokia Technologies Oy, 02610 Espoo (FI)
(72) Inventor: STANCZAK, Jedrzej, 50216 Wroclaw (PL); AWADA, Ahmad, 81249 Munich (DE); SELVAGANAPATHY, Srinivasan, Bangalore 560017 (IN); HENTTONEN, Tero, 02760 Espoo (FI)
(74) Representative: Nokia EPO representatives
(86) International application number: PCT/EP2022/070724
(87) International publication number: WO 2023/011952

(56) References cited:
- WO-A1-2021/146697
- WO-A1-2021/206464
- US-A1- 2021 136 638
- KDDI CORPORATION: "Considerations on SN-initiated CPC procedure", vol. RAN WG2, no. Online; 20210816 - 20210827, 5 August 2021 (2021-08-05), XP052033898, Retrieved from the Internet <URL:https://ftp.3gpp.org/tsg_ran/WG2_RL2/TSGR2_115-e/Docs/R2-2107111.zip R2-2107111-Consideration on CPCA procedure.docx> [retrieved on 20210805]
- HUAWEI ET AL: "Source SN configuration update at or after SN-initiated CPC", vol. RAN WG2, no. Online; 20210519 - 20210527, 24 May 2021 (2021-05-24), XP052013563, Retrieved from the Internet <URL:https://ftp.3gpp.org/tsg_ran/WG2_RL2/TSGR2_114-e/Inbox/R2-2106436.zip R2-2106436.docx> [retrieved on 20210524]
- "3rd Generation Partnership Project; Technical Specification Group Radio Access Network; Evolved Universal Terrestrial Radio Access (E-UTRA) and NR; Multi-connectivity; Stage 2 (Release 16)", vol. RAN WG2, no. V16.4.0, 6 January 2021 (2021-01-06), pages 1 - 84, XP051999626, Retrieved from the Internet <URL:https://ftp.3gpp.org/Specs/archive/37_series/37.340/37340-g40.zip 37340-g40.docx> [retrieved on 20210106]

## Description

### TECHNICAL FIELD

This application relates to wireless communications More particularly, the application relates to updating measurement configuration during conditional reconfiguration.

### BACKGROUND

A communication system may be a facility that enables communication between two or more nodes or devices, such as fixed or mobile communication devices. Signals can be carried on wired or wireless carriers.

An example of a cellular communication system is an architecture that is being standardized by the 3^{rd} Generation Partnership Project (3GPP). A recent development in this field is often referred to as the long-term evolution (LTE) of the Universal Mobile Telecommunications System (UMTS) radio-access technology. E-UTRA (evolved UMTS Terrestrial Radio Access) is the air interface of 3GPP's Long Term Evolution (LTE) upgrade path for mobile networks. In LTE, base stations or access points (APs), which are referred to as enhanced Node AP (eNBs), provide wireless access within a coverage area or cell. In LTE, mobile devices, or mobile stations are referred to as user equipments (UE). LTE has included a number of improvements or developments. Aspects of LTE are also continuing to improve.

5G New Radio (NR) development is part of a continued mobile broadband evolution process to meet the requirements of 5G, similar to earlier evolution of 3G & 4G wireless networks. In addition, 5G is also targeted at the new emerging use cases in addition to mobile broadband. A goal of 5G is to provide significant improvement in wireless performance, which may include new levels of data rate, latency, reliability, and security. 5G NR may also scale to efficiently connect the massive Internet of Things (IoT) and may offer new types of mission-critical services. For example, ultra-reliable and low-latency communications (URLLC) devices may require high reliability and very low latency.

WO2021146697 discloses a radio access network (RAN) for configuring a user equipment (UE). The RAN transmits, to the UE, (i) a conditional configuration related to a base station operating in the RAN, and (ii) a condition to be satisfied before the UE applies the conditional configuration during a conditional procedure (1802). The RAN determines subsequently to the transmitting, that the UE is to perform an immediate procedure related to the RAN (1804), and provides, to the UE, an indication that the UE is to release the conditional configuration (1806).

US20210136638 discloses a method that may be performed by a user equipment (UE). The method includes receiving, from a master node (MN), configuration information, identifying a set of candidate cells for a conditional addition or change of a SN for a the UE based on execution criteria, detecting the execution criteria is met for one of the candidate cells, and taking action to add or change to the candidate cell as an SN based on the detection.

### SUMMARY

According to some aspects, there is provided the subject matter of the independent claims. Some further aspects are defined in the dependent claims. The details of one or more examples of embodiments are set forth in the accompanying drawings and the description below. Other features will be apparent from the description and drawings, and from the claims.

### BRIEF DESCRIPTION OF THE DRAWINGS

FIG. 1 is a block diagram of a wireless network according to an example embodiment.
FIG. 2 is diagram illustrating an example operation of a secondary node (SN) initiated conditional PSCell change (CPC) according to an example embodiment.
FIG. 3 is a diagram illustrating an example operation of a conditional PSCell change (CPC) according to an example embodiment.
FIG. 4 is flow chart illustrating operation of a master node according to an example embodiment.
FIGs. 5A-5B is a flow chart illustrating operation of a master node according to another example embodiment.
FIG. 6 is a flow chart illustrating operation of a source secondary node according to an example embodiment.
FIG. 7 is a flow chart illustrating operation of a user device according to an example embodiment.
FIG. 8 is a block diagram of a wireless station or node (e.g., AP, BS, RAN node, DU, UE or user device, or network node).

### DETAILED DESCRIPTION

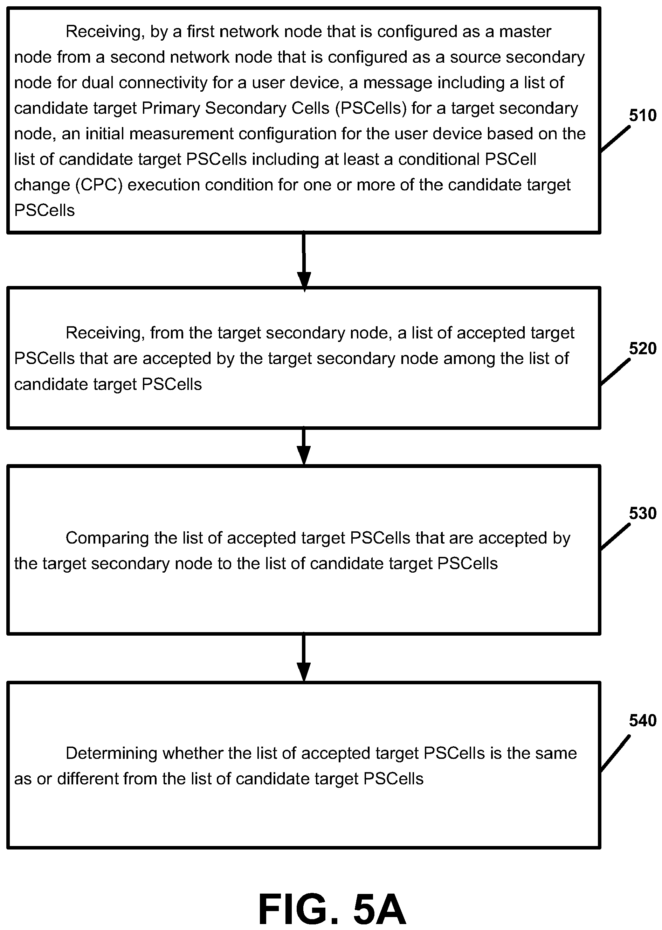

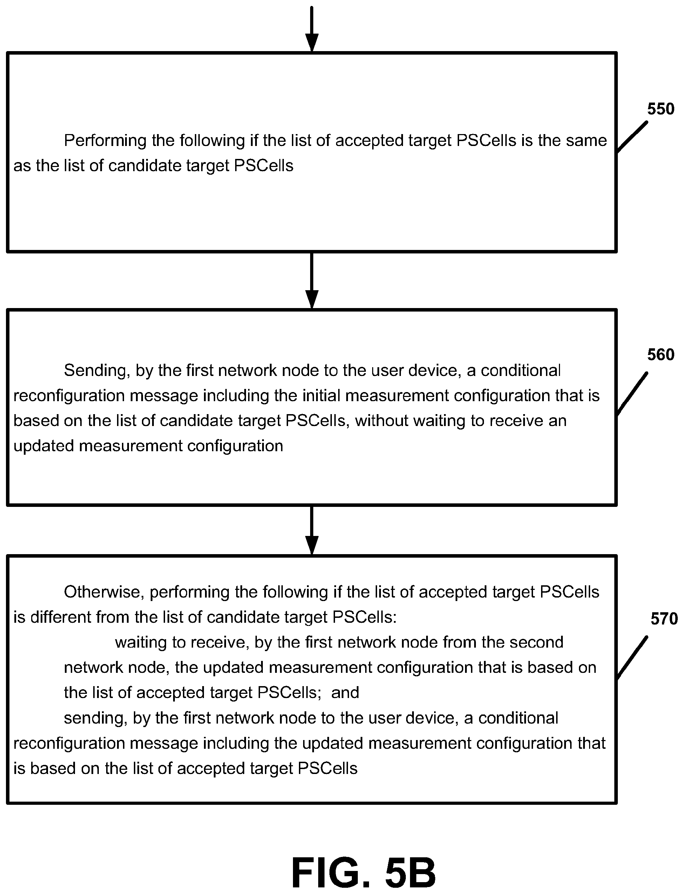

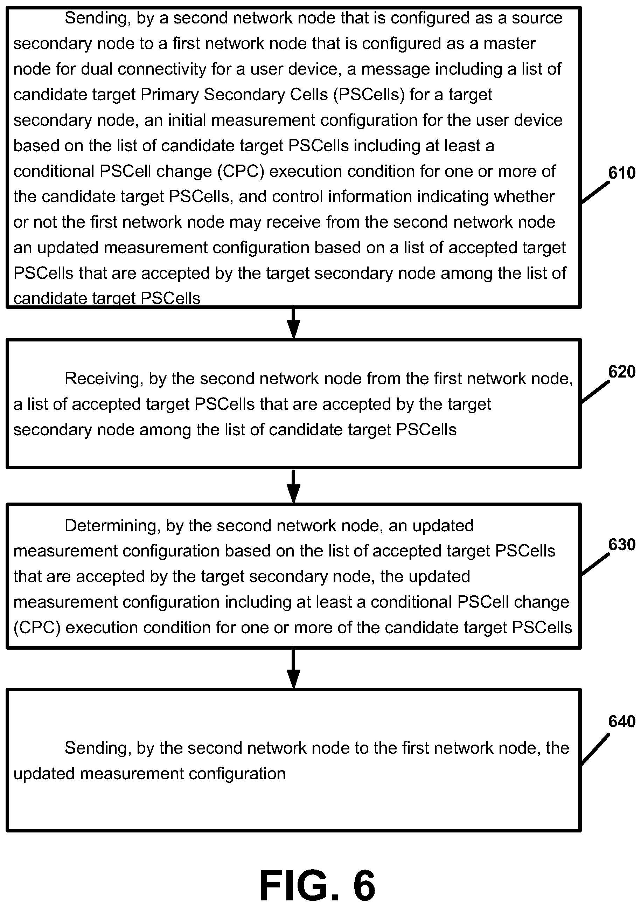

The invention concerns network nodes which are configured as master nodes or source secondary nodes which perform the procedures set out in the embodiments described with reference to figures 5 and 6 respectively. The remaining embodiments should be considered as examples helpful to understanding the invention.

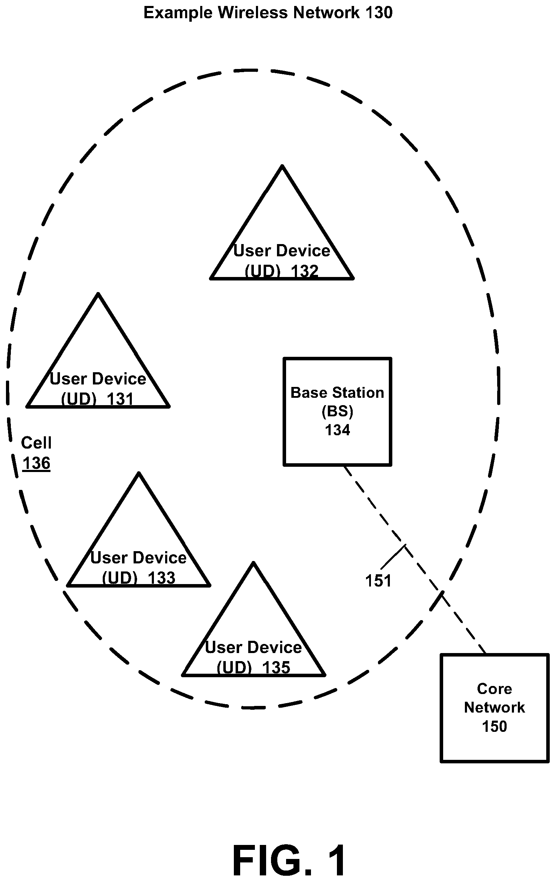

FIG. 1 is a block diagram of a wireless network 130 according to an example embodiment. In the wireless network 130 of FIG. 1, user devices 131, 132, 133 and 135, which may also be referred to as mobile stations (MSs) or user equipment (UEs), may be connected (and in communication) with a base station (BS) 134, which may also be referred to as an access point (AP), an enhanced Node B (eNB), a gNB or a network node. The terms user device and user equipment (UE) may be used interchangeably. A BS may also include or may be referred to as a RAN (radio access network) node, and may include a portion of a BS or a portion of a RAN node, such as (e.g., such as a centralized unit (CU) and/or a distributed unit (DU) in the case of a split BS or split gNB). At least part of the functionalities of a BS (e.g., access point (AP), base station (BS) or (e)Node B (eNB), gNB, RAN node) may also be carried out by any node, server or host which may be operably coupled to a transceiver, such as a remote radio head. BS (or AP) 134 provides wireless coverage within a cell 136, including to user devices (or UEs) 131, 132, 133 and 135. Although only four user devices (or UEs) are shown as being connected or attached to BS 134, any number of user devices may be provided. BS 134 is also connected to a core network 150 via a S1 interface 151. This is merely one simple example of a wireless network, and others may be used.

A base station (e.g., such as BS 134) is an example of a radio access network (RAN) node within a wireless network. A BS (or a RAN node) may be or may include (or may alternatively be referred to as), e.g., an access point (AP), a gNB, an eNB, or portion thereof (such as a /centralized unit (CU) and/or a distributed unit (DU) in the case of a split BS or split gNB), or other network node.

According to an illustrative example, a BS node (e.g., BS, eNB, gNB, CU/DU, ...) or a radio access network (RAN) may be part of a mobile telecommunication system. A RAN (radio access network) may include one or more BSs or RAN nodes that implement a radio access technology, e.g., to allow one or more UEs to have access to a network or core network. Thus, for example, the RAN (RAN nodes, such as BSs or gNBs) may reside between one or more user devices or UEs and a core network. According to an example embodiment, each RAN node (e.g., BS, eNB, gNB, CU/DU, ...) or BS may provide one or more wireless communication services for one or more UEs or user devices, e.g., to allow the UEs to have wireless access to a network, via the RAN node. Each RAN node or BS may perform or provide wireless communication services, e.g., such as allowing UEs or user devices to establish a wireless connection to the RAN node, and sending data to and/or receiving data from one or more of the UEs. For example, after establishing a connection to a UE, a RAN node or network node (e.g., BS, eNB, gNB, CU/DU, ...) may forward data to the UE that is received from a network or the core network, and/or forward data received from the UE to the network or core network. RAN nodes or network nodes (e.g., BS, eNB, gNB, CU/DU, ...) may perform a wide variety of other wireless functions or services, e.g., such as broadcasting control information (e.g., such as system information or on-demand system information) to UEs, paging UEs when there is data to be delivered to the LTE, assisting in handover of a UE between cells, scheduling of resources for uplink data transmission from the UE(s) and downlink data transmission to UE(s), sending control information to configure one or more UEs, and the like. These are a few examples of one or more functions that a RAN node or BS may perform.

A user device (user terminal, user equipment (UE), mobile terminal, handheld wireless device, etc.) may refer to a portable computing device that includes wireless mobile communication devices operating either with or without a subscriber identification module (SIM), including, but not limited to, the following types of devices: a mobile station (MS), a mobile phone, a cell phone, a smartphone, a personal digital assistant (PDA), a handset, a device using a wireless modem (alarm or measurement device, etc.), a laptop and/or touch screen computer, a tablet, a phablet, a game console, a notebook, a vehicle, a sensor, and a multimedia device, as examples, or any other wireless device. It should be appreciated that a user device may also be (or may include) a nearly exclusive uplink only device, of which an example is a camera or video camera loading images or video clips to a network.

In LTE (as an illustrative example), core network 150 may be referred to as Evolved Packet Core (EPC), which may include a mobility management entity (MME) which may handle or assist with mobility/handover of user devices between BSs, one or more gateways that may forward data and control signals between the BSs and packet data networks or the Internet, and other control functions or blocks. Other types of wireless networks, such as 5G (which may be referred to as New Radio (NR)) may also include a core network.

In addition, the techniques described herein may be applied to various types of user devices or data service types, or may apply to user devices that may have multiple applications running thereon that may be of different data service types. New Radio (5G) development may support a number of different applications or a number of different data service types, such as for example: machine type communications (MTC), enhanced machine type communication (eMTC), Internet of Things (IoT), and/or narrowband IoT user devices, enhanced mobile broadband (eMBB), and ultra-reliable and low-latency communications (URLLC). Many of these new 5G (NR) - related applications may require generally higher performance than previous wireless networks.

IoT may refer to an ever-growing group of objects that may have Internet or network connectivity, so that these objects may send information to and receive information from other network devices. For example, many sensor type applications or devices may monitor a physical condition or a status, and may send a report to a server or other network device, e.g., when an event occurs. Machine Type Communications (MTC, or Machine to Machine communications) may, for example, be characterized by fully automatic data generation, exchange, processing and actuation among intelligent machines, with or without intervention of humans. Enhanced mobile broadband (eMBB) may support much higher data rates than currently available in LTE.

Ultra-reliable and low-latency communications (URLLC) is a new data service type, or new usage scenario, which may be supported for New Radio (5G) systems. This enables emerging new applications and services, such as industrial automations, autonomous driving, vehicular safety, e-health services, and so on. 3GPP targets in providing connectivity with reliability corresponding to block error rate (BLER) of 10⁻⁵ and up to 1 ms U-Plane (user/data plane) latency, by way of illustrative example. Thus, for example, URLLC user devices/UEs may require a significantly lower block error rate than other types of user devices/UEs as well as low latency (with or without requirement for simultaneous high reliability). Thus, for example, a URLLC UE (or URLLC application on a UE) may require much shorter latency, as compared to a eMBB UE (or an eMBB application running on a UE).

The techniques described herein may be applied to a wide variety of wireless technologies or wireless networks, such as LTE, LTE-A, 5G (New Radio (NR)), cmWave, and/or mmWave band networks, IoT, MTC, eMTC, eMBB, URLLC, etc., or any other wireless network or wireless technology. These example networks, technologies or data service types are provided only as illustrative examples.

In dual-connectivity (or more generally referred to as multi-connectivity), a UE (or user device) may be connected to multiple base stations or network nodes simultaneously, where the network nodes may be of the same or different radio access technologies (RATs). Thus, for multi-connectivity, each of the network nodes may be an eNB, gNB, or other network node. For example, one of the network nodes may be referred to as a master node (MN) or master network node (e.g., master gNB (MgNB) or master eNB (MeNB)), while another network node may be referred to as a secondary node (SN) or a secondary network node (e.g., a secondary gNB (SgNB) or secondary eNB (SeNB)), e.g, with respect to the classical BS architecture. For dual or multi-connectivity, the UE may, for example, establish a first connection to a MN, and then establish a second connection to a SN. For each of the network nodes (MN or SN) that the UE is connected to, the UE may be able to communicate and/or receive data via multiple (a plurality of) cells, e.g., using carrier aggregation (CA). The cells of the MN may be referred to as a master cell group (MCG), while the cells of a SN may be referred to as a secondary cell group (SCG).

In the case of dual or multi-connectivity, the first cell (of the master cell group (MCG)) within the MN to which the UE connects is typically known as the Primary Cell (PCell), while the first cell (of the secondary cell group (SCG)) within the SN to which the UE connects is typically known as the Primary Secondary Cell (PSCell), which serves as a primary cell as far as the UE's connectivity to the SN is concerned. The PCell and the PSCell are each allocated physical uplink control channel (PUCCH) resources to allow the UE to send HARQ ACK/NAK (acknowledgement/negative acknowledgement) feedback, and other control information, to the MCG (or MN) and SCG (or SN), respectively.

Handover (HO) (or cell change) procedures may be used in 5G NR to allow a change or handover of the UE from a source network node to a target network node, e.g., to maintain robustness of connection between a user equipment (UE) and a wireless network over different cells. A UE handover (HO) may be performed for a UE for both MN and SN, e.g., based on measurement reports and/or a HO trigger condition being satisfied.

For example, with respect to a UE connected to only one network node (single connectivity, or with respect to a MN HO for dual connectivity for the UE), to effect a HO, a UE sends measurement reports to a source network node indicating measurement values for serving and neighboring cells such as reference signal received power (RSRP). The measurement report is typically sent in an event-triggered manner when the measurement values meet certain criteria (e.g., the RSRP of neighboring cell becomes better than the measurement of the serving cell by some offset for some Time-to-Trigger (TTT)). Upon receiving the measurement report, the source network node (e.g., source gNB) identifies a target network node (a target gNB) to which the source gNB sends a HO request. The target gNB may acknowledge the HO request by sending an acknowledgement message to the source gNB. In response, the source gNB then sends a radio resource control (RRC) reconfiguration message to the LTE, indicating a HO to the target gNB; at this point, data exchange between the UE and the source gNB terminates and the source gNB forwards data intended for the UE to the target gNB. The UE then initiates communication with the target gNB. For example, the UE sends a physical random access channel (PRACH) preamble to the target gNB. In response, the target gNB sends the UE a random access response (RAR), and the UE sends to the target gNB a message indicating that the RRC reconfiguration is complete. The target gNB sends the forwarded data to the UE and the connection between the UE and target gNB is established.

Alternatively, conditional HO (CHO) has been introduced to reduce radio link and HO failures. In CHO, a configured event triggers the UE to send a measurement report. Based on this report, the source gNB can prepare one or more target cells for the handover (CHO Request + CHO Request Acknowledge) and then sends an RRC Reconfiguration (including handover command) to the UE. In the baseline HO described above, the UE will immediately access the target cell to complete the handover. In contrast, for CHO, the UE will only access the target cell once an additional CHO execution condition is met (the handover preparation and execution phases are decoupled). The CHO execution condition may be configured, e.g., by the source network node in RRC Reconfiguration.

For a UE configured for dual connectivity (where the UE is connected to both a master node (MN) and a secondary node (SN)), with respect to the MN, a conditional handover may be prepared for the MN to allow the UE to perform a conditional handover from a source MN to a target MN when the CHO execution condition is met. Likewise, with respect to the SN, a Conditional PSCell Change (CPC) may be configured to allow the UE to perform a conditional handover or conditional PSCell change from a source SN to a target SN when the CHO/CPC execution condition is met for the target SN.

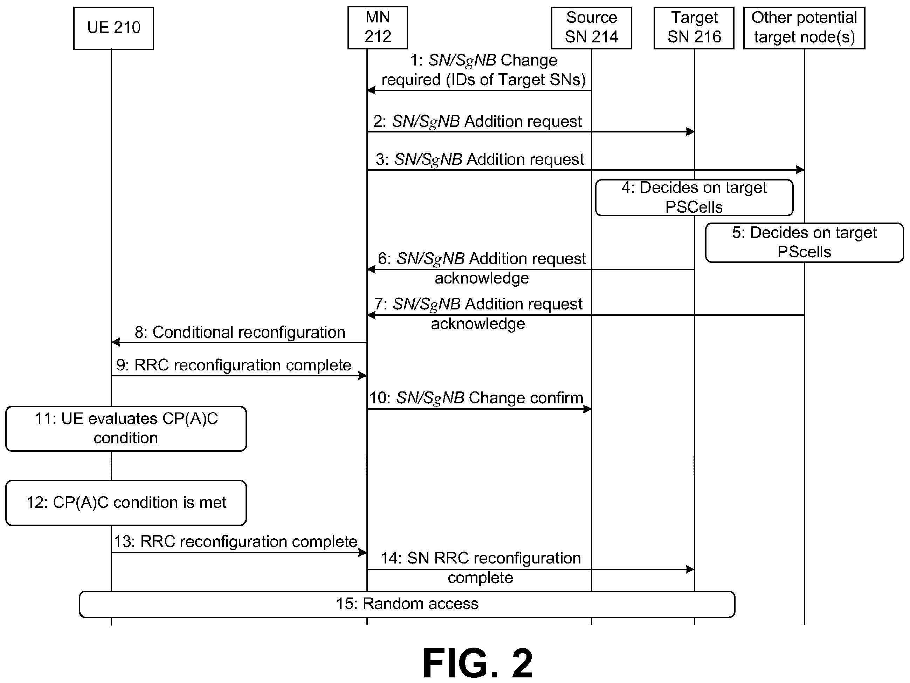

FIG. 2 is diagram illustrating an example operation of a secondary node (SN) initiated conditional PSCell change (CPC) according to an example embodiment. In the example of FIG. 2, inefficiencies may result in the UE 210 continuing to measure one or more cells or frequencies for which target cells have not been accepted or prepared by a target SN. This may create an unnecessary measurement gap and/or unnecessary measurements of reference signals by the UE 210, which is inefficient. As shown in FIG. 2, a UE 210 may be configured for dual connectivity, and connected to a master node (MN 212) and a source secondary node (source SN) 214. Various potential target SNs may also exist, including a target SN 216. As noted, the MN and SNs may be any type of network node, such as a gNB, or other network node. Operations 1-15 are shown in FIG. 2.

In step 1, the source SN 214 indicates to MN 212 the identities or identifiers (IDs) of the target SNs that should be contacted for preparing target PSCell(s). Thus, at step 1, source SN 214 may send to MN 212 a SN/SgNB change required message, which may include IDs of the target SNs, and a list of candidate target Primary Secondary Cells (PSCells) for each indicated target SN, and a measurement configuration for the UE. The measurement configuration for the UE is determined (or configured) by the source SN 214 based on the list of candidate target PSCells, and may include the list of candidate target PSCells and an execution condition (e.g., a conditional PSCell change (CPC) execution condition) for each of or one or more of the candidate target PSCells. The measurement configuration for the UE may also include information indicating a measurement object for each candidate cell, e.g., indicating time-frequency resources or indicating reference signals to be measured by the UE 210. Thus, a measurement configuration may indicate frequencies or carrier(s) of cells of the list of candidate target PSCells to be measured by the UE 210. The measurement configuration may be relayed or forwarded by MN 212 to UE 210 via message at step 8.

In step 2/3, MN 212 may send to target SN 216 a SN addition request (at step 2) including the list of candidate target PSCells configured or indicated by the source SN 214 for target SN 216.

In step 4/5, the target SN 216 selects one or more of the candidate target PSCell(s) to accept and prepare for potential CPC. The target SN 216 may accept one or more, or even all, of the cells of the list of candidate target PSCells. Target SN 216 accepting/preparing a cell, among cells on the list of candidate target PSCells, may include, for example, allocating resources, such as a signaling radio bearer (SRB) configuration, a random access procedure (RACH) preamble, and/or other preparations for the accepted cell, to allow for a possible CPC, by UE 210, for that accepted cell. For example, a target cell (or CPC) configuration may be used by UE 210 at step 15 to access the target cell via RACH procedure in response to the execution condition (CPC condition, at steps 11 and 12) for such target cell being met.

In step 6/7, the target SN 216 sends to MN 212 a SN addition request acknowledge message that includes the CPC configuration (target cell configuration) for each accepted (e.g., prepared) target PSCell of the list of accepted target PSCell(s), among the list of candidate target PSCells. The SN addition request acknowledge at step 6 may include IDs/identifiers of the list of accepted (prepared) target PSCells. As noted, the CPC configuration (or target cell configuration) for each accepted target PSCell may include configuration or resources that may be used by the UE 210 to access the accepted target PSCell at step 15, after the execution condition (CPC condition) for such accepted target PSCell is met. As noted, the CPC configuration (target cell configuration) for an accepted target PSCell may include an SRB configuration (for a SRB configured for the UE for that cell), an indication of a RACH preamble that may be used for RACH access at step 15 by the UE 210, time-frequency resources, etc., or other target cell configuration.

In step 8, the MN 212 sends to UE 210 a conditional (re-)configuration message including: the measurement configuration (e.g., which may include the list of the candidate target PSCell to be measured, and the CPC execution conditions and measurement objects or indication of resources or reference signals to be measured for each cell of the list of candidate target PSCells) for the LTE, which is determined by the source SN 214 based on the list of candidate target PSCells; and the target cell configurations (CPC configurations) of the list of accepted target PSCell(s) that is determined by the target SN 216 based on the list of accepted target PSCells.

In step 9, the UE sends a message to MN confirming the reception of the conditional configuration message at step 8, and MN 212 confirms (at step 11) to source SN 214 the SN change preparation in step 10.

In step 11, the UE 210 evaluates the CPC (or target cell) execution conditions of the accepted (prepared) target PSCell(s) for target SN 216.

In step 12, UE 210 determines that the CPC (or target cell) execution condition is met for one of the candidate target PSCells for (or provided by or in) target SN 216.

In step 13, UE 210 sends a message to MN 212 indicating the execution of the CPC configuration. The message includes an embedded SN RRC Reconfiguration Complete to the target SN 216 which is sent in step 14.

At step 15, based on the CPC execution condition being met for one of the accepted target PSCells, UE 210 completes (or performs) the random access to the target cell of target SN 216, based on the CPC (or target cell) configuration for this target cell.

With reference to FIG. 2, UE 210 may measure reference signals (e.g., SSB or CSI reference signals) from one or more cells, based on the measurement configuration (which from above, is typically based on the list of candidate target PSCells). In some cases, the measurement configuration may indicate or instruct the UE to measure inter-frequency cells (or cells that are provided on different frequencies or carriers), which may require the receiver of the UE 210 to switch or retune to different frequencies or carrier signals. For example, UE 210 may measure reference signals for a first cell via a first carrier or first frequency, and may measure a reference signal for a second (inter-frequency, as they are on different carriers) cell on a different carrier or frequency. A measurement gap may refer to or include a gap or time period in which the receiver of the UE 210 may retune from a first carrier or frequency to a second carrier or frequency. However, the UE may typically be unavailable for scheduling by the gNB during the UE's measuring of reference signals and also during measurement gaps where the UE is switching or retuning its receiver to receive a different carrier or frequency.

However, in some cases, one or more problems or inefficiencies may arise as part of this process shown in FIG. 2. For example, as noted above, at step 1, the MN 212 receives from source SN 214 a measurement configuration for the UE, which is determined (or configured) by the source SN 214 based on the list of candidate target PSCells. The measurement configuration is relayed or forwarded to the UE at step 8. Also, at step 4, the target SN 216 determines a list of accepted (prepared) target PSCells among the list of candidate target PSCells, and provides, at step 5, a CPC (or target cell) configuration for the cells of the list of target PSCells. Thus, T-SN selects the list of accepted target PSCells and determines a CPC configuration for each accepted (prepared) target PSCell. In this particular example shown in FIG. 2, at step 6, the target SN 216 sends to the MN 212 (but not to the source SN 214) sends the CPC (target cell) configuration for each accepted (prepared) target PSCell. Thus, because the source SN 214 does not receive the list of accepted target PSCells, SN 214 is unable to adjust the measurement configuration for the UE. Thus, at step 8, the MN 212 sends the CPC configurations for the accepted target PSCells, and the measurement configuration for the list of candidate target PSCells (some of which may not have been accepted/prepared by T-SN 216). Thus, the UE 210 may typically measure all the candidate target PSCells, at different frequencies, for cells indicated in measurement configuration from MN 212, but the measurement configuration is not typically updated at the UE 210 to reflect the actual candidate target cells that were accepted by target SN, so the UE may be measuring cells or frequencies unnecessarily, and thus, may have an unnecessary measurement gap(s). At least in some cases, this may result in inefficiencies, a waste of UE resources, and/or limits scheduling flexibility of the network to schedule UE 210 (since the UE may unnecessarily be occupied measuring cells that were not accepted, and/or there may be measurement gaps for the UE that are unnecessary).

Various example embodiments and/or alternatives are described that may, at least in some cases, improve efficiency of this process of PSCell reconfiguration at the UE.

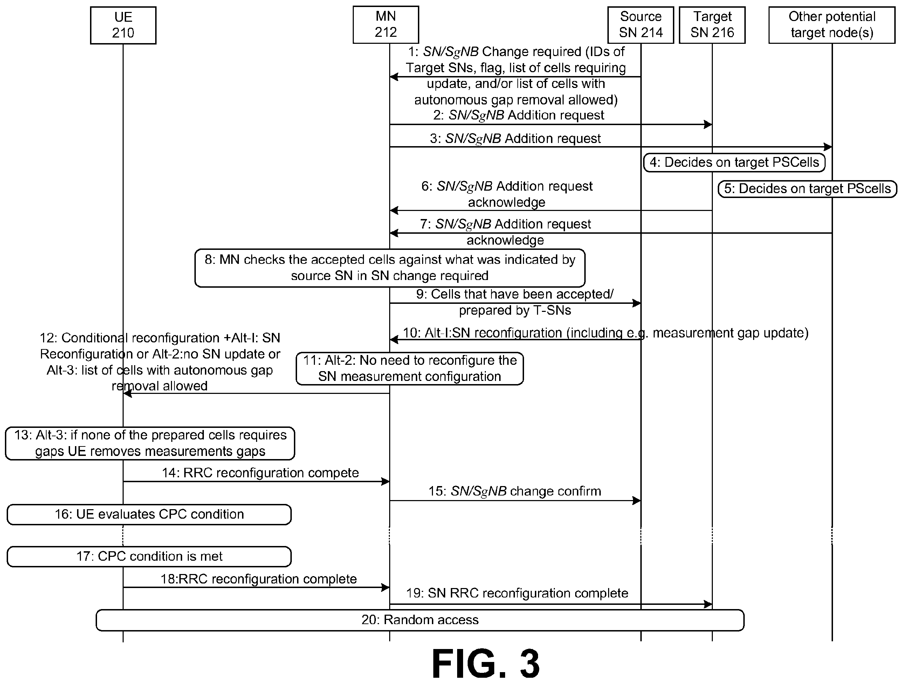

FIG. 3 is a diagram illustrating an example operation of a conditional PSCell change (CPC) according to an example embodiment. The differences of the operation of FIG. 3, as compared to operation of FIG. 2, is described below (but otherwise may be the same or similar as FIG. 3, at least for some steps of FIG. 3). Different alternatives are described (Alt-1, Alt-2, Alt-3), with additional variations and features possible as well.

In an illustrative example, MN 212 may receive a message (e.g., at step 1, FIG. 3) including control information (e.g., a flag) indicating whether or not the MN 212 may receive from the source SN 214 (via a message at step 10, FIG. 3) an updated measurement configuration based on a list of accepted target PSCells that are accepted by the target SN 216 among a list of candidate target PSCells. The MN 212 may send to the UE 210, a conditional PSCell reconfiguration message including the initial measurement configuration that is based on the list of candidate target PSCells if the control information (e.g., flag) indicated that the first network node will not receive from the source SN an updated measurement configuration. Otherwise, the MN 212 may send to the UE 210 a conditional PSCell reconfiguration message including the updated measurement configuration that is based on the list of accepted target PSCells if the control information (e.g., flag in the message at step 1) indicated that the MN 212 may receive from the source SN 214 an updated measurement configuration based on the list of accepted target PSCells.

In Alternative-1 (Alt-1), Alt-2 and Alt-3, at step 1, source SN 214 sends a SN change required message to MN 212, which may include the identities or identifiers (IDs) of the target SNs that should be contacted for preparing target PSCell(s). Thus, at step 1 of FIG. 3 for Alt-1, source SN 214 may send to MN 212 a SN/SgNB change required message, which may include IDs of the target SNs, and a list of candidate target Primary Secondary Cells (PSCells) for each indicated target SN, and an initial measurement configuration for the UE. The initial measurement configuration for the UE is determined (or configured) by the source SN 214 based on the list of candidate target PSCells, and may include the list of candidate target PSCells and an execution condition (e.g., a conditional PSCell change (CPC) execution condition) for each of or one or more of the candidate target PSCells. The initial measurement configuration for the UE may also include information indicating a measurement object for each candidate cell.

The SN change required message (at step 1, FIG. 3) may include control information (e.g., a flag or bit) indicating whether or not the MN 212 may receive from the source SN 214 (at step 10, FIG. 3) an updated measurement configuration based on a list of accepted target PSCells that are accepted by the target SN 216 among a list of candidate target PSCells.

In Alt-1, the control information (or flag) of message of step 1 indicates that the MN 212 may receive from the source SN 214 (at step 10, FIG. 3) an updated measurement configuration based on a list of accepted target PSCells that are accepted by the target SN 216. MN 212, after reporting at step 9 to target SN 216 the accepted target PSCells that were accepted by target SN 216, may wait to receive (at step 10) an updated SN configuration including an updated measurement configuration that is based on the list of accepted cells that the target SN 216 accepted (prepared) among the list of candidate target PSCells. The updated measurement configuration may include an execution condition (e.g., a conditional PSCell change (CPC) execution condition) for each of or one or more of the accepted target PSCells (accepted by the target SN 216), and information indicating a measurement object for each accepted PSCell, e.g., indicating time-frequency resources or indicating reference signals to be measured by the UE 210. Thus, the updated measurement configuration may indicate frequencies or carrier(s) of cells of the list of accepted target PSCells. In one example of Alt-1 (where the flag received at step 1 includes information indicating that the MN may receive an updated measurement configuration at step 10), the MN 212 may unconditionally (without performing comparison at step 8) wait to receive an updated measurement configuration (that is based on the list of accepted target PSCells) at step 10, before proceeding to forward the updated measurement configuration to the UE 210 at step 12. In another example of Alt-1, the MN 212 may first compare, at step 8, the list of candidate target PSCells may unconditionally wait to receive an updated measurement configuration (that is based on the list of accepted PSCells) at step 10, before proceeding to forward the updated measurement configuration to the UE 210 at step 12. In another example of Alt-1, the MN 212 may, at step 8, compare the list of candidate target PSCells (indicated to MN 212 via message at step 1) to the list of accepted target PSCells (indicated to MN 212 via message at step 6), and MN 212 waits to receive updated measurement configuration at step 10 (before proceeding to step 12) if those two lists (list of candidate target PSCells as compared to list of accepted target PSCells) are different, and otherwise, if comparison at step 8 indicates these two lists are the same, the MN 212 does not wait to receive (or does not receive) updated measurement configuration at step 10, but just immediately proceeds to step 12 (without receiving or without waiting to receive any updated measurement configuration, since there is no need to update the measurement configuration, since the accepted target cells is same as the candidate target cell).

For Alt-2, the MN 212 may determine that it will not receive an updated measurement configuration at step 10, based on either: 1) the flag (control information) of message of step 1 indicating that MN 212 will not receive (or that it should not expect to receive) from the source SN 214 an updated measurement configuration; or 2) the comparison performed by MN 212 at step 8 indicates that the list of accepted target PSCells (accepted by the target SN 216) is the same as the list of candidate target PSCells (indicated to MN 212 via message at step 1, FIG. 3), and thus no need to update the measurement configuration. For Alt-2, based on at least one of these conditions being true (as confirmed at step 11 of FIG. 3 by MN 212, where MN 212 determines that there is no need to receive updated measurement configuration and/or no need to reconfigure SN measurement configuration), MN 212 knows or determines that it will not receive (or that it should not wait to receive) an updated measurement configuration via step 10, FIG. 3, and MN 212 may simply proceed (e.g., without waiting to receive an updated measurement configuration at step 10) to step 12.

Steps 2-7 of FIG. 3 may be the same or similar to steps 2-7 of FIG. 2, and that description of those steps is described above with respect to FIG. 2, e.g., for Alt-1, Alt-2 and/or Alt-3. Also, for Alt-1, Alt-2 and/or Alt-3, MN 212 may typically perform step 9, e.g., in which the MN 212 reports to source SN 214 the accepted target PSCells (which were reported or indicated by target SN 216 to MN 212 at step 6) that have been accepted (prepared) by the target SN 216 (among the list of candidate target PSCells).

In Alt-1, after reporting the list of accepted target PSCells to source SN 214 at step 9, MN 212 receives (and/or waits to receive, at step 10) an updated measurement configuration based on the accepted target PSCells. In Alt-1, MN 212 may send to UE 210, at step 12, a conditional reconfiguration message (e.g., a conditional PSCell reconfiguration message) including the updated measurement configuration that is based on the list of accepted target PSCells and PSCell configurations for each of the accepted target PSCells.

In Alt-2, after reporting the list of accepted target PSCells to source SN 214 at step 9, MN 212 does not receive (and/or does not wait to receive, at step 10) an updated measurement configuration based on the accepted target PSCells. In Alt-2, MN 212 may send to UE 210, at step 12, a conditional reconfiguration message (e.g., a conditional PSCell reconfiguration message) including the initial measurement configuration that is based on the list of candidate target PSCells and PSCell configurations for each of the candidate target PSCells.

Thus, in Alt-2, an updated measurement configuration is not obtained by MN 212 (step 10 may be skipped by MN 212), nor provided to the UE 210 at step 12, but rather, the initial measurement configuration (obtained by MN 212 via step 1) is sent to the UE 210 at step 12 (e.g., along with a list of the candidate target PSCells and the CPC configuration for each cell of the list of candidate target PSCells).

Whereas for Alt-1, an updated measurement configuration is obtained by MN 212 at step 10, and is sent or provided to the UE 210 at step 12 (e.g., along with a list of the accepted target PSCells and the CPC configuration for each cell of the list of accepted target PSCells). At step 10, the updated measurement configuration may be, or may be considered, or may include, a measurement gap update, since accepted target PSCells are indicated (and these accepted may or may not be inter-frequency, or have reference signals on same or different carrier/carrier frequencies, which thus may or may not require a measurement gap). UE 210 may determine such measurement gap update based on the accepted target PSCells, and whether any of the accepted target PSCells are inter-frequency cells (or provided on different carriers or frequencies, that would require a measurement gap for the UE to switch or tune its receiver to the different frequency for reference signal measurement).

Steps 14-20 may be the same as or similar to the steps 9-15 of FIG. 2, but are performed based on the information received by the UE in Conditional reconfiguration message at step 12, e.g., including based on either: for Alt-1: the updated measurement configuration based on the accepted target PSCells and target cell (target PSCell) configurations for the accepted target PSCells; or for Alt-2: the initial measurement configuration based on the candidate target PSCells and target cell (target PSCell) configurations for the candidate target PSCells.

In another example embodiment, the SN change required message at step 1 may include a list of cells (a list of target PSCells) requiring an updated measurement configuration. After receiving the list of accepted target PSCells at step 6, the MN 212 may determine if the list of accepted cells includes any cells that were indicated in message at step 1 that require an updated measurement configuration, the MN 212 obtains an updated measurement configuration at 10, and then sends this updated measurement configuration to the UE 210 at step 12.

In another example embodiment, in general, a measurement gap may be released or added by a UE, based on the (carriers or frequencies of reference signals for the) accepted target PSCells, for example. For example, if inter-frequency cells are not included in the list of accepted target PSCells, then a measurement gap that is associated with an inter-frequency cell that has been omitted from the accepted target PSCells, may be released by the UE 210. Or, if the list of accepted target PSCells includes inter-frequency cells (target PSCells on different carriers or frequencies), then the UE may add a measurement gap to allow the UE to perform measurement for the cells of the list of accepted target PSCells.

For Alt-3, the message at step 1 may include a list of cells with autonomous measurement gap removal is allowed by the UE. This list of cells with autonomous measurement gap removal allowed, may be forwarded to the UE from MN 212 via message at 12. The UE 210 may then determine if one of these cells was omitted from the received measurement configuration (e.g., updated measurement configuration). The UE 210 may, for example, release (remove or omit) the measurement gap of a cell on this list, if such cell is not on the list of cells (e.g., accepted cells) of the received measurement configuration, and the information in message of step 1 indicates that the UE 210 may remove such measurement gap. Thus, efficiency may be improved by allowing the UE to release or remove a measurement gap for an inter-frequency cell that is omitted from (or not included within) the measurement configuration (e.g., updated measurement configuration) and/or list of cells (e.g., list of accepted target PSCells) received by UE 210 via step 12.

Some further examples or details are provided below.

For example a Source SN may inform the MN in Step 1: SN Change Required , indicating whether or not the MN shall wait for the response (in step 10) from the source SN upon receiving the information on which target PSCells have been prepared (the list of accepted target PSCells, via message at step 9):
If the source SN has indicated in Step 1: SN Change Required that no such response (no updated measurement configuration at step 10) should be expected, the MN informs the source SN of which cells have been accepted/prepared and then proceeds directly to step 12 to send the CPC command (RRC Reconfiguration message towards the LTE, comprising measurement configuration (including CPC execution conditions) and Target PSCell configurations).

If the source SN has indicated in Step 1: SN Change Required that such measurement reconfiguration may be required (and thus an indication that the MN should receive or wait to receive at step 10, the updated measurement configuration) that an updated measurement configuration (e.g., in case target SN accepts the inter-frequency candidate PSCell, which may require to provide the UE with a measurement gap), then the MN sends (at step 9) the notification on which cells were accepted/prepared to source SN and waits for the response which may include a reconfiguration of SN's configuration at the UE (to be provided via MN). Alternatively, this may also be provided to the UE via SRB3, directly from the SN, if SRB3 is supported).

The source SN can also inform in Step 1: SN Change Required as to which particular cells requires the update of the measurement configuration, so MN shall wait for source SN's reaction (at step 10) to the list of accepted cells, e.g., MN should wait to receive updated measurement configuration, based on list of accepted target PSCells.

Alternative method (denoted by Alt-3): UE autonomous gap disabling/releasing as part of CPAC or CPC evaluation. Source SN can inform in Step 1 autonomous gap disabling/releasing at UE based on the applicable cells as part of CPC evaluation. In this case source SN decides to activate the measurement gap based on the list of cells indicated from MN after CPC preparation, e.g., UE may activate a measurement gap if inter-frequency cells are included on list of accepted target PSCells and the UE has permission to adjust (add or release) the measurement gap.

For example, the UE may determine or decide to use measurement gap only if at least one of the applicable (listed) cells (accepted target PSCells) are inter-frequency cell. In the same way source SN may also decide to activate a measurement gap only if there is one inter-frequency candidate cell prepared.

1st example, wherein SN has intra-frequency neighbours : cells c1, c2:
In this example, measurement gaps are not configured at all in the measurement configuration since the measurement object configured by SN is for the same frequency. In this case, after the first measurement report is sent by the UE to the source SN the preparations for, e.g., cell c1 (and/or cell c2) start. Source SN indicates to MN that there is no need to wait for the response (at step 10) from source SN after informing source SN about the list of prepared cells (at step 9).

2nd example, wherein SN has inter-frequency neighbours, cells c1, c2:
In this example, measurement gaps are configured in the measurement configuration since the measurement object configured by SN is for different frequency. After the first measurement report is triggered for cell, e.g. c1 (and/or c2), source SN triggers CPC preparation for cell c1 (and/or cell c2). Source SN indicates to MN that there is no need to wait (at step 10) for the response from source SN after informing SN about the list of prepared cells. This is because the source SN has already configured measurement gaps which are needed to measure both cells c1 and c2.

3rd example, wherein SN has intra-frequency neighbours, cells c1, c2 and inter-frequency neighbours, cells c3, c4:
In this example, measurements gaps are configured for measuring inter-frequency cells, i.e., c3 and c4. When the first measurement report is received by source SN (which serves as a basis for triggering the CPC preparations), e.g., cells c2 and c3 are selected by the source SN to be prepared from the target SN. The decision concerning the future use of measurement gaps depends on which of those will be finally accepted and prepared by target SN. If c3 is prepared by target SN, then the measurement gap is needed. But as it was configured beforehand, no need for the SN to take subsequent actions and update the measurement configuration. If c3 is not prepared by target SN, then the measurement gap can be released. Herein, MN informs the source SN about the list of prepared PSCells and S-SN reconfigures its measurement configuration (also referred to as the updated measurement configuration) which is provided to the UE along with the conditional reconfiguration. The MN may send such notification and wait for S-SN's response before contacting the UE, based on the list of cells (received in Step 1: SN Change Required) which - in case any cell is accepted that require further reconfiguration from the source SN.

### Example Embodiments for Alt-1 and Alt-2:

In one embodiment, the MN updates the source SN (irrespective of the prepared target PSCells) as shown in step 9 and waits for a response from the source SN (see Alt-1 in step 10) before sending the conditional reconfiguration to the UE if the flag value set by source SN (in Step 1) was V1 (value 1). Herein, the MN does not need to perform the check (comparison) of step 8.

In another embodiment, the MN updates the source SN in step 9 and waits for a response from the source SN (at step 10) before sending the conditional reconfiguration to the UE (see Alt-1 in step 10) only if the target SN prepared at least one PSCell that is part of the "list of cells requiring update" provided by source SN to MN in Step 1 of FIG. 3, i.e., the flag may be set to value V2 in this case. This is illustrated in steps 8, 9 and 10.

In another embodiment, the MN sends immediately the conditional reconfiguration to the UE (irrespective of the prepared target PSCells) without waiting for a response from the source SN (i.e., without step 10 of Fig.2) if the flag value set by the source SN is, e.g., V3, i.e., see Alt-2 in step 11. Herein, the MN does not need to perform the check of step 8. Step 10 also does not apply.

### Example Embodiment for Alt-3:

In yet another embodiment, the MN informs the S-SN on which cells have been prepared and sends directly the Conditional Reconfiguration to the UE without waiting for a response from the source SN (i.e. without Step 10). In Step 1 of Fig.2 the S-SN already informed the MN which cells require the measurement gaps. S-SN knows which measurement gaps would need to be disabled, based on the ultimate subset of candidate PSCells (provided to S-SN in Step 9). The UE receives the reconfiguration message (Step 12) and checks the list of ultimately prepared cells against the list of cells requiring gaps ( "list of cells with autonomous gap removal allowed"). UE performs autonomous gap deactivation, without explicitly communicating it with the network. Flag value set by the source SN in the message sent in Step 1 could be set to V4. This is shown as Alt-3 in FIG. 3.

### Some Example Advantages:

An updated measurement configuration may be obtained and forwarded to the UE, to improve efficiency, by allowing release of measurement gaps and signal measurement only for indicated target PSCells, for example. Also, for example, the measurement configuration may be updated only when it is needed, reducing the signaling overhead, latency and unnecessary measurement gap configurations. Also, a UE may be allowed to adjust measurement gap(s), e.g., add or release a measurement gap, e.g., based on control signals indicating permission to make such change to measurement gap(s) and/or based on the list of target PSCells or measurement configuration provided to the UE.

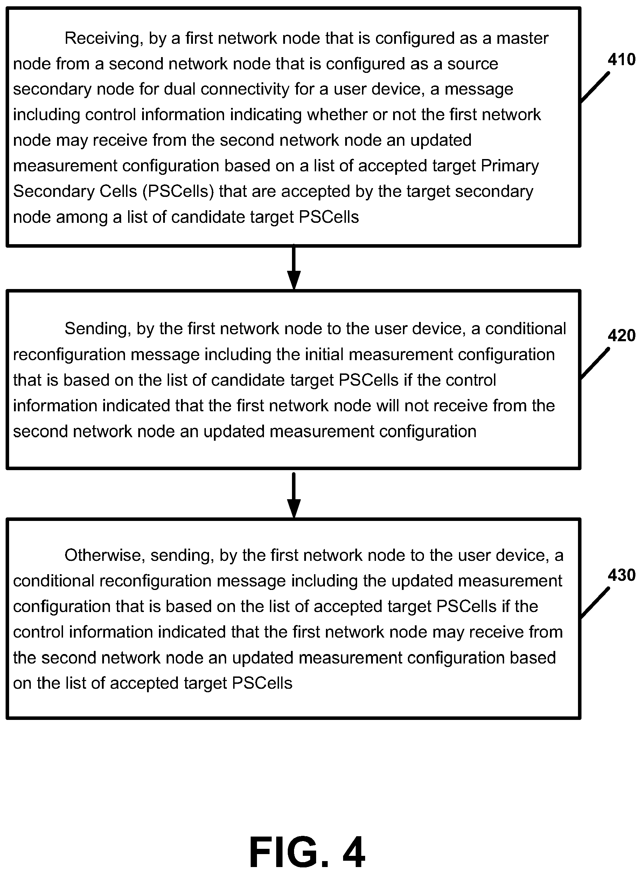

FIG. 4 is flow chart illustrating operation of a master node according to an example embodiment. Operation 410 includes receiving, by a first network node that is configured as a master node from a second network node that is configured as a source secondary node for dual connectivity for a user device, a message including control information indicating whether or not the first network node may receive from the second network node an updated measurement configuration based on a list of accepted target Primary Secondary Cells (PSCells) that are accepted by the target secondary node among a list of candidate target PSCells. Operation 420 includes sending, by the first network node to the user device, a conditional reconfiguration message including the initial measurement configuration that is based on the list of candidate target PSCells if the control information indicated that the first network node will not receive from the second network node an updated measurement configuration. Operation 430 includes otherwise, sending, by the first network node to the user device, a conditional reconfiguration message including the updated measurement configuration that is based on the list of accepted target PSCells if the control information indicated that the first network node may receive from the second network node an updated measurement configuration based on the list of accepted target PSCells.

FIGs. 5A-5B is a flow chart illustrating operation of a master node according to another example embodiment. Operation 510 includes receiving, by a first network node that is configured as a master node from a second network node that is configured as a source secondary node for dual connectivity for a user device, a message including a list of candidate target Primary Secondary Cells (PSCells) for a target secondary node, an initial measurement configuration for the user device based on the list of candidate target PSCells including at least a conditional PSCell change (CPC) execution condition for one or more of the candidate target PSCells. Operation 520 includes receiving, from the target secondary node, a list of accepted target PSCells that are accepted by the target secondary node among the list of candidate target PSCells. Operation 530 includes comparing the list of accepted target PSCells that are accepted by the target secondary node to the list of candidate target PSCells. Operation 540 includes determining whether the list of accepted target PSCells is the same as or different from the list of candidate target PSCells. Operation 550 includes performing the following if the list of accepted target PSCells is the same as the list of candidate target PSCells: sending (560), by the first network node to the user device, a conditional reconfiguration message including the initial measurement configuration that is based on the list of candidate target PSCells, without waiting to receive an updated measurement configuration. Operation 570 includes otherwise, performing the following if the list of accepted target PSCells is different from the list of candidate target PSCells: waiting to receive, by the first network node from the second network node, the updated measurement configuration that is based on the list of accepted target PSCells; and sending, by the first network node to the user device, a conditional reconfiguration message including the updated measurement configuration that is based on the list of accepted target PSCells.

FIG. 6 is a flow chart illustrating operation of a source secondary node according to an example embodiment. Operation 610 includes sending, by a second network node that is configured as a source secondary node to a first network node that is configured as a master node for dual connectivity for a user device, a message including a list of candidate target Primary Secondary Cells (PSCells) for a target secondary node, an initial measurement configuration for the user device based on the list of candidate target PSCells including at least a conditional PSCell change (CPC) execution condition for one or more of the candidate target PSCells, and control information indicating whether or not the first network node may receive from the second network node an updated measurement configuration based on a list of accepted target PSCells that are accepted by the target secondary node among the list of candidate target PSCells. Operation 620 includes receiving, by the second network node from the first network node, a list of accepted target PSCells that are accepted by the target secondary node among the list of candidate target PSCells. Operation 630 includes determining, by the second network node, an updated measurement configuration based on the list of accepted target PSCells that are accepted by the target secondary node, the updated measurement configuration including at least a conditional PSCell change (CPC) execution condition for one or more of the candidate target PSCells. Operation 640 includes sending, by the second network node to the first network node, the updated measurement configuration .

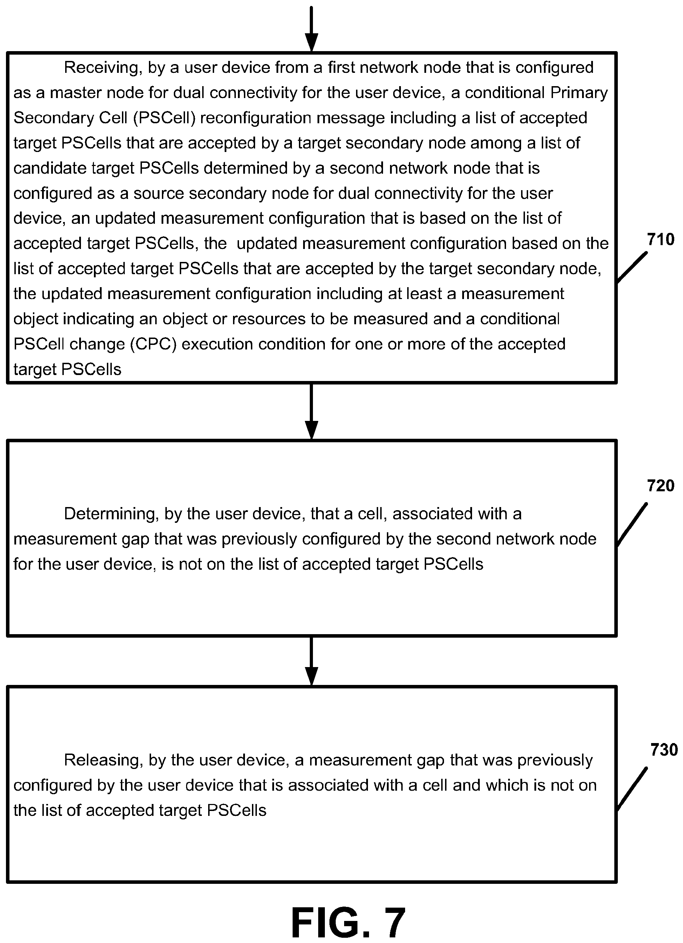

FIG. 7 is a flow chart illustrating operation of a user device according to an example embodiment. Operation 710 includes receiving, by a user device from a first network node that is configured as a master node for dual connectivity for the user device, a conditional reconfiguration message including a list of accepted target Primary Secondary Cells (PSCells) that are accepted by a target secondary node among a list of candidate target PSCells determined by a second network node that is configured as a source secondary node for dual connectivity for the user device, an updated measurement configuration that is based on the list of accepted target PSCells, the updated measurement configuration based on the list of accepted target PSCells that are accepted by the target secondary node, the updated measurement configuration including at least a measurement object indicating an object or resources to be measured and a conditional PSCell change (CPC) execution condition for one or more of the accepted target PSCell. Operation 720 includes determining, by the user device, that a cell, associated with a measurement gap that was previously configured by the second network node for the user device, is not on the list of accepted target PSCells. Operation 730 includes releasing, by the user device, a measurement gap that was previously configured by the user device that is associated with a cell and which is not on the list of accepted target PSCells.

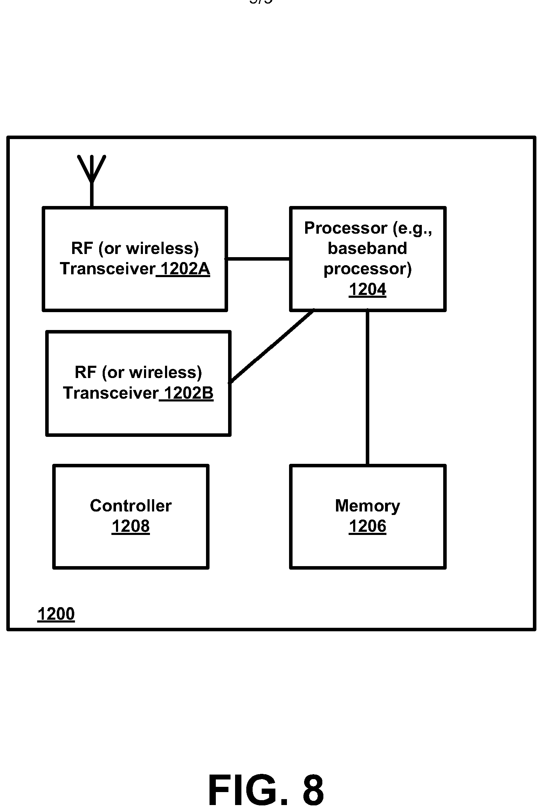

FIG. 8 is a block diagram of a wireless station (e.g., AP, BS or user device/UE, or other network node) 1200 according to an example embodiment. The wireless station 1200 may include, for example, one or more (e.g., two as shown in FIG. 8) RF (radio frequency) or wireless transceivers 1202A, 1202B, where each wireless transceiver includes a transmitter to transmit signals and a receiver to receive signals. The wireless station also includes a processor or control unit/entity (controller) 1204 to execute instructions or software and control transmission and receptions of signals, and a memory 1206 to store data and/or instructions.

Processor 1204 may also make decisions or determinations, generate frames, packets or messages for transmission, decode received frames or messages for further processing, and other tasks or functions described herein. Processor 1204, which may be a baseband processor, for example, may generate messages, packets, frames or other signals for transmission via wireless transceiver 1202 (1202A or 1202B). Processor 1204 may control transmission of signals or messages over a wireless network, and may control the reception of signals or messages, etc., via a wireless network (e.g., after being downconverted by wireless transceiver 1202, for example). Processor 1204 may be programmable and capable of executing software or other instructions stored in memory or on other computer media to perform the various tasks and functions described above, such as one or more of the tasks or methods described above. Processor 1204 may be (or may include), for example, hardware, programmable logic, a programmable processor that executes software or firmware, and/or any combination of these. Using other terminology, processor 1204 and transceiver 1202 together may be considered as a wireless transmitter/receiver system, for example.

In addition, referring to FIG. 8, a controller (or processor) 1208 may execute software and instructions, and may provide overall control for the station 1200, and may provide control for other systems not shown in FIG. 8, such as controlling input/output devices (e.g., display, keypad), and/or may execute software for one or more applications that may be provided on wireless station 1200, such as, for example, an email program, audio/video applications, a word processor, a Voice over IP application, or other application or software.

In addition, a storage medium may be provided that includes stored instructions, which when executed by a controller or processor may result in the processor 1204, or other controller or processor, performing one or more of the functions or tasks described above.

According to another example embodiment, RF or wireless transceiver(s) 1202A/1202B may receive signals or data and/or transmit or send signals or data. Processor 1204 (and possibly transceivers 1202A/1202B) may control the RF or wireless transceiver 1202A or 1202B to receive, send, broadcast or transmit signals or data.

The embodiments are not, however, restricted to the system that is given as an example, but a person skilled in the art may apply the solution to other communication systems. Another example of a suitable communications system is the 5G concept. It is assumed that network architecture in 5G may be similar to that of LTE-advanced. 5G is likely to use multiple input - multiple output (MIMO) antennas, many more base stations or nodes than LTE (a so-called small cell concept), including macro sites operating in cooperation with smaller stations and perhaps also employing a variety of radio technologies for better coverage and enhanced data rates.

It should be appreciated that future networks will most probably utilise network functions virtualization (NFV) which is a network architecture concept that proposes virtualizing network node functions into "building blocks" or entities that may be operationally connected or linked together to provide services. A virtualized network function (VNF) may comprise one or more virtual machines running computer program codes using standard or general type servers instead of customized hardware. Cloud computing or data storage may also be utilized. In radio communications this may mean node operations may be carried out, at least partly, in a server, host or node may be operationally coupled to a remote radio head. It is also possible that node operations will be distributed among a plurality of servers, nodes or hosts. It should also be understood that the distribution of labour between core network operations and base station operations may differ from that of the LTE or even be non-existent.

Embodiments of the various techniques described herein may be implemented in digital electronic circuitry, or in computer hardware, firmware, software, or in combinations of them. Embodiments may be implemented as a computer program product, i.e., a computer program tangibly embodied in an information carrier, e.g., in a machine readable storage device or in a propagated signal, for execution by, or to control the operation of, a data processing apparatus, e.g., a programmable processor, a computer, or multiple computers. Embodiments may also be provided on a computer readable medium or computer readable storage medium, which may be a non-transitory medium. Embodiments of the various techniques may also include embodiments provided via transitory signals or media, and/or programs and/or software embodiments that are downloadable via the Internet or other network(s), either wired networks and/or wireless networks. In addition, embodiments may be provided via machine type communications (MTC), and also via an Internet of Things (IOT).

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers.

Furthermore, embodiments of the various techniques described herein may use a cyber-physical system (CPS) (a system of collaborating computational elements controlling physical entities). CPS may enable the embodiment and exploitation of massive amounts of interconnected ICT devices (sensors, actuators, processors microcontrollers, ...) embedded in physical objects at different locations. Mobile cyber physical systems, in which the physical system in question has inherent mobility, are a subcategory of cyber-physical systems. Examples of mobile physical systems include mobile robotics and electronics transported by humans or animals. The rise in popularity of smartphones has increased interest in the area of mobile cyber-physical systems. Therefore, various embodiments of techniques described herein may be provided via one or more of these technologies.

A computer program, such as the computer program(s) described above, can be written in any form of programming language, including compiled or interpreted languages, and can be deployed in any form, including as a standalone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer, chip or chipset. Generally, a processor will receive instructions and data from a read-only memory or a random access memory or both. Elements of a computer may include at least one processor for executing instructions and one or more memory devices for storing instructions and data. Generally, a computer also may include, or be operatively coupled to receive data from or transfer data to, or both, one or more mass storage devices for storing data, e.g., magnetic, magnetooptical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magnetooptical disks; and CDROM and DVD-ROM disks. The processor and the memory may be supplemented by, or incorporated in, special purpose logic circuitry.

To provide for interaction with a user, embodiments may be implemented on a computer having a display device, e.g., a cathode ray tube (CRT) or liquid crystal display (LCD) monitor, for displaying information to the user and a user interface, such as a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments may be implemented in a computing system that includes a backend component, e.g., as a data server, or that includes a middleware component, e.g., an application server, or that includes a frontend component, e.g., a client computer having a graphical user interface or a Web browser through which a user can interact with an embodiment, or any combination of such backend, middleware, or frontend components. Components may be interconnected by any form or medium of digital data communication, e.g., a communication network. Examples of communication networks include a local area network (LAN) and a wide area network (WAN), e.g., the Internet.

## Claims

1. A method performed by a first network node that is configured as a master node (212), the method comprising:
receiving (510), from a second network node that is configured as a source secondary node (214) for dual connectivity for a user device (210), a message including a list of candidate target Primary Secondary Cells, PSCells, for a target secondary node, an initial measurement configuration for the user device based on the list of candidate target PSCells including at least a conditional PSCell change, CPC, execution condition for one or more of the candidate target PSCells;
receiving (520), from the target secondary node, a list of accepted target PSCells that are accepted by the target secondary node among the list of candidate target PSCells;
comparing (530) the list of accepted target PSCells that are accepted by the target secondary node to the list of candidate target PSCells;
determining (540) whether the list of accepted target PSCells is the same as or different from the list of candidate target PSCells;
performing (550) the following if the list of accepted target PSCells is the same as the list of candidate target PSCells:
sending (560) a conditional reconfiguration message including the initial measurement configuration that is based on the list of candidate target PSCells, without waiting to receive an updated measurement configuration;
otherwise, performing (570) the following if the list of accepted target PSCells is different from the list of candidate target PSCells:
waiting to receive, by the first network node from the second network node, the updated measurement configuration that is based on the list of accepted target PSCells; and
sending, by the first network node to the user device (210), a conditional reconfiguration message including the updated measurement configuration that is based on the list of accepted target PSCells.

2. The method of claim 1, further comprising:
sending, by the first network node (212) to the second network node (214), the list of accepted target PSCells;
wherein the receiving, by the first network node from the second network node, the updated measurement configuration is based on the list of accepted target cells sent to the second network node.

3. The method of claim 1 or 2:
wherein the message further comprises a request to provide a list of accepted target PSCells that are accepted by the target secondary node (216) among the list of candidate target PSCells; and
wherein the method further comprises:
sending, by the first network node (212) to the target secondary node, a secondary node addition request message that includes the list of candidate PSCells for the target secondary node.

4. The method of any of claims 1 to 3 wherein the sending a conditional reconfiguration message including the initial measurement configuration comprises:
sending, by the first network node (212) to the user device (210), a conditional reconfiguration message including the initial measurement configuration that is based on the list of candidate target PSCells and PSCell configurations for each of the candidate target PSCells.

5. The method of any of claims 1 to 4, wherein the sending, by the first network node (212) to the user device (210), a conditional reconfiguration message including the updated measurement configuration comprises:
sending, by the first network node to the user device, a conditional reconfiguration message including the updated measurement configuration that is based on the list of accepted target PSCells and PSCell configurations for each of the accepted target PSCells.

6. The method of claim 1:
wherein the message further comprises an indication that the user device (210) may release a measurement gap if the list of accepted target PSCells do not include an inter-frequency cell associated with the measurement gap;
wherein the sending, by the first network node to the user device, a conditional reconfiguration message including the updated measurement configuration comprises:
sending, by the first network node to the user device, a conditional reconfiguration message including the updated measurement configuration that is based on the list of accepted target PSCells, PSCell configurations for each of the accepted target PSCells, and the indication that the user device may release a measurement gap if the list of accepted target PSCells does not include an inter-frequency cell associated with the measurement gap.

7. A network node (212) comprising means for performing the method of any of claims 1 to 6.

8. A method performed by a second network node (214) that is configured as a source secondary node, the method comprising:
sending (610), to a first network node that is configured as a master node (212) for dual connectivity for a user device (210), a message including a list of candidate target Primary Secondary Cells, PSCells, for a target secondary node, an initial measurement configuration for the user device based on the list of candidate target PSCells including at least a conditional PSCell change, CPC, execution condition for one or more of the candidate target PSCells, and control information indicating whether or not the first network node may receive from the second network node an updated measurement configuration based on a list of accepted target PSCells that are accepted by the target secondary node among the list of candidate target PSCells;
receiving (620), from the first network node, a list of accepted target PSCells that are accepted by the target secondary node among the list of candidate target PSCells;
determining (630) an updated measurement configuration based on the list of accepted target PSCells that are accepted by the target secondary node, the updated measurement configuration including at least a conditional PSCell change, CPC, execution condition for one or more of the candidate target PSCells; and
sending (640), to the first network node, the updated measurement configuration.

9. The method of claim 8, wherein the message comprises a secondary node change required message (1).

## Patentansprüche

1. Verfahren, das von einem ersten Netzwerkknoten durchgeführt wird, der als ein Masterknoten (212) ausgelegt ist, wobei das Verfahren Folgendes umfasst:
Empfangen (510) einer Nachricht, die eine Liste von primären Zielsekundärzell(PSCells)-Kandidaten für einen Zielsekundärknoten beinhaltet, von einem zweiten Netzwerkknoten, der für eine duale Konnektivität für eine Benutzervorrichtung (210) als ein Quellsekundärknoten (214) ausgelegt ist, wobei eine anfänglichen Messauslegung für die Benutzervorrichtung auf Basis der Liste von Ziel-PSCell-Kandidaten mindestens eine Ausführungsbedingung für eine bedingte PSCell-Änderung, CPC, für einen oder mehrere der Ziel-PSCell-Kandidaten beinhaltet;
Empfangen (520) einer Liste von akzeptierten Ziel-PSCells, die vom Zielsekundärknoten in der Liste von Ziel-PSCell-Kandidaten akzeptiert wurde, vom Zielsekundärknoten;
Vergleichen (530) der Liste von akzeptierten Ziel-PSCells, die vom Zielsekundärknoten akzeptiert wurden, mit der Liste von Ziel-PSCell-Kandidaten;
Bestimmen (540), ob die Liste von akzeptierten Ziel-PSCells dieselbe ist wie die oder sich von der Liste von Ziel-PSCell-Kandidaten unterscheidet;
Durchführen (550) von Folgendem, wenn die Liste von akzeptierten Ziel-PSCells dieselbe ist wie die Liste von Ziel-PSCell-Kandidaten:
Senden (560) einer bedingten Neuauslegungsnachricht, die die anfänglichen Messauslegung beinhaltet, die auf der Liste von Ziel-PSCell-Kandidaten basiert, ohne auf das Empfangen einer aktualisierten Messauslegung zu warten;
andernfalls Durchführen (570) von Folgendem, wenn sich die Liste von akzeptierten Ziel-PSCells von der Liste von Ziel-PSCell-Kandidaten unterscheidet:
Warten auf das Empfangen der aktualisierten Messauslegung, die auf der Liste von akzeptierten Ziel-PSCells basiert, durch den ersten Netzwerkknoten vom zweiten Netzwerkknoten; und
Senden einer bedingten Neuauslegungsnachricht, die die aktualisierte Messauslegung beinhaltet, die auf der Liste von akzeptierten Ziel-PSCells basiert, vom ersten Netzwerkknoten an die Benutzervorrichtung (210).

2. Verfahren nach Anspruch 1, das ferner Folgendes umfasst:
Senden der Liste von akzeptierten Ziel-PSCells vom ersten Netzwerkknoten (212) an den zweiten Netzwerkknoten (214);
wobei das Empfangen der aktualisierten Messauslegung auf der Liste von akzeptierten Zielzellen basiert, die an den zweiten Netzwerkknoten gesendet wurde, durch den ersten Netzwerkknoten vom zweiten Netzwerkknoten.

3. Verfahren nach Anspruch 1 oder 2:
wobei die Nachricht ferner eine Anforderung zum Bereitstellen einer Liste von akzeptierten Ziel-PSCells, die vom Zielsekundärknoten (216) in der Liste von Ziel-PSCell-Kandidaten akzeptiert wurden, umfasst; und
wobei das Verfahren ferner Folgendes umfasst:
Senden einer Sekundärknotenhinzufügungsanforderungsnachricht, die die Liste von PSCell-Kandidaten für den Zielsekundärknoten beinhaltet, durch den ersten Netzwerkknoten (212) an den Zielsekundärknoten.

4. Verfahren nach einem der Ansprüche 1 bis 3, wobei das Senden einer bedingten Neuauslegungsnachricht, die die anfängliche Messauslegung beinhaltet, Folgendes umfasst:
Senden einer bedingten Neuauslegungsnachricht, die die anfängliche Messauslegung, die auf der Liste von Ziel-PSCell-Kandidaten basiert, und PSCell-Auslegungen für jeden der Ziel-PSCell-Kandidaten beinhaltet, durch den ersten Netzwerkknoten (212) an die Benutzervorrichtung (210).

5. Verfahren nach einem der Ansprüche 1 bis 4, wobei das Senden einer bedingten Neuauslegungsnachricht, die die aktualisierte Messauslegung beinhaltet, durch den ersten Netzwerkknoten (212) an die Benutzervorrichtung (210) Folgendes umfasst:
Senden einer bedingten Neuauslegungsnachricht, die die aktualisierte Messauslegung, die auf der Liste von akzeptierten Ziel-PSCells basiert, und PSCell-Auslegungen für jede der akzeptierten Ziel-PSCells beinhaltet, durch den ersten Netzwerkknoten an die Benutzervorrichtung.

6. Verfahren nach Anspruch 1:
wobei die Nachricht ferner eine Anzeige umfasst, dass die Benutzervorrichtung (210) eine Messlücke freigeben kann, wenn die Liste von akzeptierten Ziel-PSCells keine Interfrequenzzelle beinhaltet, die mit der Messlücke verknüpft ist;
wobei das Senden einer bedingten Neuauslegungsnachricht, die die aktualisierte Messauslegung beinhaltet, durch den ersten Netzwerkknoten an die Benutzervorrichtung Folgendes umfasst:
Senden einer bedingten Neuauslegungsnachricht, die die aktualisierte Messauslegung, die auf der Liste von akzeptierten Ziel-PSCells basiert, PSCell-Auslegungen für jede der akzeptierten Ziel-PSCells und die Anzeige beinhaltet, dass die Benutzervorrichtung eine Messlücke freigeben kann, wenn die Liste von akzeptierten Ziel-PSCells keine Interfrequenzzelle beinhaltet, die mit der Messlücke verknüpft ist, durch den ersten Netzwerkknoten an die Benutzervorrichtung.

7. Netzwerkknoten (212), der Mittel zum Durchführen des Verfahrens nach einem der Ansprüche 1 bis 6 umfasst.

8. Verfahren, das von einem zweiten Netzwerkknoten (214) durchgeführt wird, der als ein Quellsekundärknoten ausgelegt ist, wobei das Verfahren Folgendes umfasst:
Senden (610) einer Nachricht, die eine Liste von primären Zielsekundärzell(PSCell)-Kandidaten für einen Zielsekundärknoten, eine anfängliche Messauslegung für die Benutzervorrichtung, die auf der Liste von Ziel-PSCell-Kandidaten basiert, die mindestens eine Ausführungsbedingung für eine bedingte PSCell-Änderung, CPC, für eine oder mehrere der Ziel-PSCell-Kandidaten beinhaltet, und Steuerinformationen beinhaltet, die anzeigen, ob ein erster Netzwerkknoten eine aktualisierte Messauslegung auf Basis einer Liste von akzeptierten Ziel-PSCells, die vom Zielsekundärknoten in der Liste von Ziel-PSCell-Kandidaten akzeptiert wurden, vom zweiten Netzwerkknoten empfangen kann oder nicht, an den ersten Netzwerkknoten, der für eine duale Konnektivität für eine Benutzervorrichtung (210) als ein Masterknoten (212) ausgelegt ist;
Empfangen (620) einer Liste von akzeptierten Ziel-PSCells, die vom Zielsekundärknoten in der Liste von Ziel-PSCell-Kandidaten akzeptiert wurde, vom ersten Netzwerkknoten;
Bestimmen (630) einer aktualisierten Messauslegung auf Basis der Liste von akzeptierten Ziel-PSCells, die vom Zielsekundärknoten akzeptiert wurden, wobei die aktualisierte Messauslegung mindestens eine Ausführungsbedingung für eine bedingte PSCell-Änderung, CPC, für einen oder mehrere der Ziel-PSCell-Kandidaten beinhaltet; und
Senden (640) der aktualisierten Messauslegung an den ersten Netzwerkknoten.

9. Verfahren nach Anspruch 8, wobei die Nachricht eine Nachricht (1) umfasst, die eine Änderung eines Sekundärknotens anfordert.

## Revendications

1. Procédé réalisé par un premier nœud de réseau qui est configuré comme un nœud instructeur (212), le procédé comprenant les étapes suivantes :
recevoir (510) d'un deuxième nœud de réseau qui est configuré comme un nœud secondaire source (214) pour une double connectivité pour un dispositif utilisateur (210) un message comportant une liste de cellules secondaires primaires cibles candidates, PSCell, pour un nœud secondaire cible, une configuration de mesure initiale pour le dispositif utilisateur basée sur la liste de PSCell cibles candidates comportant au moins une condition d'exécution de changement de PSCell conditionnel, CPC, pour une ou plusieurs des PSCell cibles candidates ;
recevoir (520) du nœud secondaire cible une liste de PSCell cibles acceptées qui sont acceptées par le nœud secondaire cible parmi la liste de PSCell cibles candidates ;
comparer (530) la liste de PSCell cibles acceptées qui sont acceptées par le nœud secondaire cible à la liste de PSCell cibles candidates ;
déterminer (540) si la liste de PSCell cibles acceptées est identique à la liste de PSCell cibles candidates ou différente de celle-ci ;
effectuer (550) ce qui suit si la liste de PSCell cibles acceptées est identique à la liste de PSCell cibles candidates :
envoyer (560) un message de reconfiguration conditionnel comportant la configuration de mesure initiale qui est basée sur la liste de PSCell cibles candidates sans attendre de recevoir une configuration de mesure mise à jour ;
sinon, effectuer (570) ce qui suit si la liste de PSCell cibles acceptées est différente de la liste de PSCell cibles candidates :
attendre de recevoir du deuxième nœud de réseau, par le premier nœud de réseau, la configuration de mesure mise à jour qui est basée sur la liste de PSCell cibles acceptées ; et
envoyer, par le premier nœud de réseau au dispositif utilisateur (210), un message de reconfiguration conditionnel comportant la configuration de mesure mise à jour qui est basée sur la liste de PSCell cibles acceptées.

2. Procédé selon la revendication 1, comprenant en outre les étapes suivantes :
envoyer, par le premier nœud de réseau (212) au deuxième nœud de réseau (214), la liste de PSCell cibles acceptées ;
dans lequel la réception, en provenance du deuxième nœud de réseau par le premier nœud de réseau, de la configuration de mesure mise à jour est basée sur la liste de cellules cibles acceptées envoyée au deuxième nœud de réseau.

3. Procédé selon la revendication 1 ou 2 :
dans lequel le message comprend en outre une demande de fournir une liste de PSCell cibles acceptées qui sont acceptées par le nœud secondaire cible (216) parmi la liste de PSCell cibles candidates ; et
dans lequel le procédé comprend en outre l'étape suivante :
envoyer, par le premier nœud de réseau (212) au nœud secondaire cible, un message de demande d'ajout de nœud secondaire qui comporte la liste de PSCell candidates pour le nœud secondaire cible.

4. Procédé selon l'une des revendications 1 à 3, dans lequel l'envoi d'un message de reconfiguration conditionnel comportant la configuration de mesure initiale comprend ce qui suit :
envoyer, par le premier nœud de réseau (212) au dispositif utilisateur (210), un message de reconfiguration conditionnel comportant la configuration de mesure initiale qui est basée sur la liste de PSCell cibles candidates et des configurations PSCell pour chacune des PSCell cibles candidates.

5. Procédé selon l'une des revendications 1 à 4, dans lequel l'envoi, par le premier nœud de réseau (212) au dispositif utilisateur (210), d'un message de reconfiguration conditionnel comportant la configuration de mesure mise à jour comprend ce qui suit :
envoyer, par le premier nœud de réseau au dispositif utilisateur, un message de reconfiguration conditionnel comportant la configuration de mesure mise à jour qui est basée sur la liste de PSCell cibles acceptées et des configurations PSCell pour chacune des PSCell cibles acceptées.

6. Procédé selon la revendication 1 :
dans lequel le message comprend en outre une indication selon laquelle le dispositif utilisateur (210) peut libérer un intervalle de mesure si la liste de PSCell cibles acceptées ne comporte pas de cellule inter-fréquence associée à l'intervalle de mesure ;
dans lequel l'envoi, par le premier nœud de réseau au dispositif utilisateur, d'un message de reconfiguration conditionnel comportant la configuration de mesure mise à jour comprend ce qui suit :
envoyer, par le premier nœud de réseau au dispositif utilisateur, un message de reconfiguration conditionnel comportant la configuration de mesure mise à jour qui est basée sur la liste de PSCell cibles acceptées, des configurations PSCell pour chacune des PSCell cibles acceptées, et l'indication selon laquelle le dispositif utilisateur peut libérer un intervalle de mesure si la liste de PSCell cibles acceptées ne comporte pas de cellule inter-fréquence associée à l'intervalle de mesure.

7. Nœud de réseau (212) comprenant des moyens pour effectuer le procédé selon l'une des revendications 1 à 6.

8. Procédé réalisé par un deuxième nœud de réseau (214) qui est configuré comme un nœud secondaire source, le procédé comprenant les étapes suivantes :
envoyer (610) à un premier nœud de réseau qui est configuré comme un nœud instructeur (212) pour une double connectivité pour un dispositif utilisateur (210) un message comportant une liste de cellules secondaires primaires cibles candidates, PSCell, pour un nœud secondaire cible, une configuration de mesure initiale pour le dispositif utilisateur basée sur la liste de PSCell cibles candidates comportant au moins une condition d'exécution de changement de PSCell conditionnel, CPC, pour une ou plusieurs des PSCell cibles candidates, et des informations de commande indiquant si le premier nœud de réseau peut recevoir ou non du deuxième nœud de réseau une configuration de mesure mise à jour basée sur une liste de PSCell cibles acceptées qui sont acceptées par le nœud secondaire cible parmi la liste de PSCell cibles candidates ;
recevoir (620) du premier nœud de réseau une liste de PSCell cibles acceptées qui sont acceptées par le nœud secondaire cible parmi la liste de PSCell cibles candidates ;
déterminer (630) une configuration de mesure mise à jour sur la base de la liste de PSCell cibles acceptées qui sont acceptées par le nœud secondaire cible, la configuration de mesure mise à jour comportant au moins une condition d'exécution de changement de PSCell conditionnel, CPC, pour une ou plusieurs des PSCell cibles candidates ; et
envoyer (640) au premier nœud de réseau la configuration de mesure mise à jour.

9. Procédé selon la revendication 8, dans lequel le message comprend un message de changement de nœud requis (1) secondaire.
